# EUROPEAN PATENT APPLICATION

(11) **EP 1 097 835 A1**
(43) Date of publication of application: **09.05.2001**
(21) Application number: 99830692.2
(22) Date of filing: 03.11.1999
(51) Int. Cl.: B60L 5/36

(54) **Multiple Collector Trolley**

(71) Applicant: Giannessi, Giorgio Maria Rita, 00152 Roma (IT)
(72) Inventor: Giannessi, Giorgio Maria Rita, 00152 Roma (IT)

(57) **Abstract**

The Multiple Collector Trolley (MCT) is a new type of mobile tap which furnishes electric power to transport vehides, drawing it from trolley wires, single- or multi-phase, with one or more conductors.

The salient features of the Multiple Collector Trolley, which distinguish it from other systems at present in use, are:
- it can establish electrical contact with the trolley wires, through one or more conductors, at any point whatever of the contact surface; it does not require the provision of any guide for lateral constraint of the trolley wires;
- contact with and disconnection from the trolley wires can be realized under any conditions, with the vehide stationary or in motion;
- it permits even discontinuous power supply to the vehicle, when provided with storage batteries, without requiring any interruption of service;
- the trolley wires can be realized in separate sections and can be interrupted in correspondence with road crossings, underpasses, and wherever there may be special problems;
- use of the device does not require any great modification of the means of transport at present in service.

## Description

### A) Technical Area: electro-technology, transmission of electrical energy.

### B) Field of Application: systems for the transmission of electrical energy between trolley wires and electrically-driven vehicles.

### C) Present State of the Technique (systems of transmission at present in use)

**1. Tyred vehicles used on roads (trolley bus):**
   - Stationary part: trolley wires supplying two-phase power through two conductors;
   - Part attached to vehicle: two sliding contacts with channeled shoe or roller, supported by pantograph arms.
**2. Vehicles on rails (train and tram):**
   - Stationary part: trolley wire supplying monophase power and a rail track;
   - Part attached to vehicle: one flat sliding contact, on pantograph support, for the trolley wire; and the vehicle wheels for contact with the track.

### D) Limitations of Present Systems of Electrical Energy Transmission through Sliding Contacts.

1. Trolley bus:
   a) The sliding contacts of the trolley bus comprise channeled shoes, along which the trolley wires run. The channeling is intended to keep the sliding shoe aligned and adhering to the trolley wires, even when the vehicle, as it proceeds along the road, progressively changes its position with respect to the trolley wires.
   b) In case the conducting wire accidentally escapes from the chanelling, the coupling between the shoe and the wire is permanently lost and in this case, to restore the contact, the service personnel must operate from the ground after halting the vehicle.
   c) The interruptions of service indicated in (b) happen rather frequently when the vehicle moves outside the vertical from the trolley wires and when it encounters a crossroads; nor can the reliability of the service be improved, in such cases, with the help of storage batteries.
   d) As a consequence of this unreliability, trolley bus transport services are seldom implemented, in spite of the fact that electrically powered transport represents the highest level of respect for the environment, with its almost total absence of noise and atmospheric emissions.
2. Trains and trams:
   a)The electrical power supply employed by these means of transport uses the rail track as the second electrical conductor and thus, whilst guaranteeing high reliability, is subject to all the negative features of the rail network:
   1. A considerable impact on the environment, both urban and extra-urban, and a notable obstacle to the viability of other forms of transport;
   2. Interruption of service in case of inoperability of the rail track;
   3. Costs of setting up and maintaining the system are considerably higher than those of other means of transport.

### E) TITLE OF THE INVENTION: "MULTIPLE COLLECTOR TROLLEY"

### F) DESCRIPTION OF THE INVENTION

The invention concerns a new type of mobile tap, for transferring single- or multi-phase electrical energy from trolley wires to a transport vehicle, using multiple conductors.

The basic feature of this mobile tap is a collecting 'shoe' or roller, whose length is unrestricted, constructed from any number of pairs of sectors, each comprising one conducting and one insulating element.

The pairs of sectors, suitably spaced, may be assembled in the same manner as in the case of collectors for direct ('continuous') current machines.

The shoe can have a flat form and be fixed on a support, or can be cylindrical, rotating like a roller.

With the combined use of two or more of these basic elements, appropriately exploiting the matching positions of the conducting and insulating plates on one shoe with those on a second shoe, one obtains the transfer of energy from the trolley wires to the moving vehicle, across all points of contact between the wires and the shoe.

In this way the shoe no longer requires any guiding channel or lateral constraints and it is thus possible to activate or deactivate the contact between the shoe and the trolley wires, whether the vehicle on which it is employed be stationary or in any state of motion whatever.

It is this salient characteristic of the new device that makes it completely novel with respect to other multi-conductor multi-phase trolleys at present known and in use with overhead trolley wires.

In the remainder of this document, this new type of trolley will be given the name "Multiple Collector Trolley" (MCT), regardless of whether the device employs flat shoes or rotating rollers.

The MCT combines, within a single device, the characteristics of reliability of the trolley for train or tram, using a single trolley wire; and those of reduced environmental impact, arising from the use of electric power by a trolley bus using two trolley wires.

With this new system of power supply, one overcomes and eliminates all the constraints that have until now inhibited the full application of electrical traction to road transport vehicles.

### G. ADVANTAGES

The advantages resulting from the use of the MCT, with respect to other systems at present in use, are;
1) No rail track network is required for vehicles making use of the MCT;
2) Physical contact between the MCT and the trolley wires can be interrupted and restored at any moment, whether the vehicle be stationary or in motion;
3) The vehicle, if provided with storage batteries, can be used on mixed routes, some parts of which are not served by trolley wires, without ever interrupting the service;
4) The new trolley wires can be interrupted at crossroads, thus eliminating the need to provide the present systems of exchange and interconnection at such points;
5) Maximum reliability of the transport service will result from the elimination of all problems connected with:
   a. precarious mechanical connection between the collecting shoe and the trolley wires,
   b. dependence on continuity of the trolley wires,
   c. dependence on the availability of and access to an existing rail network.

### H) CONCLUSIONS

**The paragraphs above have indicated and demonstrated that there exists the concrete possibility, through the utilization of the Multiple Collector Trolley, of opening up a new phase in the technology of transport, distinct and different from the present forms with regard to:**
- management costs, which will be greatly reduced;
- minimum environmental damage.

### METHODS OF IMPLEMENTATION

The implementation of a system of electric power supply using the MTS requires the availability of:
1. Transport vehicles equipped with:
   - the new multiple collector trolley;
   - an autonomous power supply using storage batteries;
   - an electric motor for propulsion;
2. A network of trolley wires covering the route, or parts of the route, used by the transport vehicle.

### I) INDUSTRIAL APPLICATIONS

The Drawings 5/5 show a possible application of the MCTto an urban transport vehicle. The practical application, which would require modest investment and only a short time for activation, can be implemented by making ready the trolley wires in the urban centre and by replacing the conventional motors, of existing vehicles, with electric motors.

### J) DESCRIPTION OF THE DRAWINGS

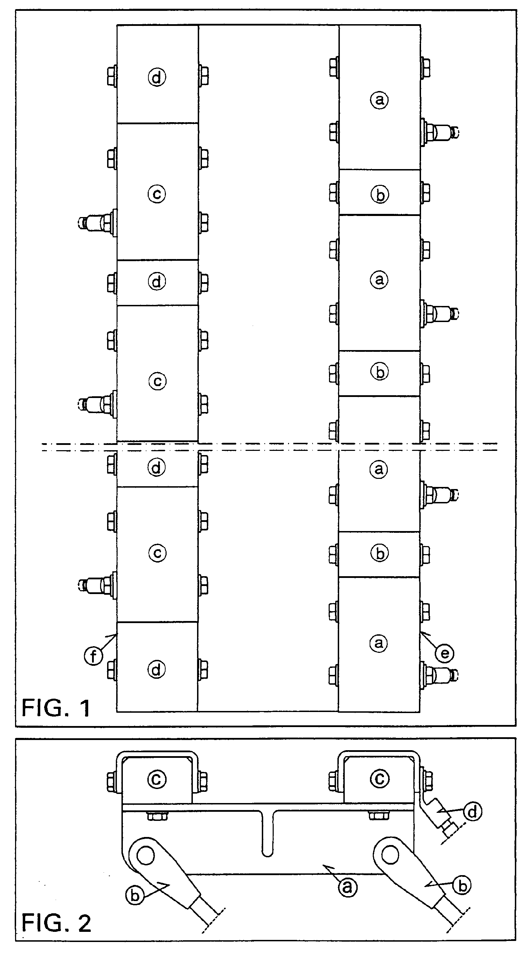

Drawing 1/5, comprising Figures 1 and 2, shows the construction principle of the MCT. In the drawing, as it is sufficient to illustrate the principle only once, the application chosen is to a flat shoe.

In Fig.1 (view from above) the following details are shown:
- Fig.1 a) Conducting plate on the front (leading) shoe
- Fig.1 b) Insulating plate on the front (leading) shoe
- Fig.1 c) Conducting plate on the rear (trailing) shoe
- Fig.1 d) Insulating plate on the rear (trailing) shoe
- Fig.1 e) Front shoe
- Fig.1 f) Rear shoe

In Fig.2 (side view) the following details are shown:
- Fig.2 a) Supporting frame for the shoes
- Fig.2 b) Supporting pantograph
- Fig.2 c) Common insulating support for the conducting and insulating plates
- Fig.2 d) Electrical connections

The dimensions and relative positions of the conducting and insulating plates of the two shoes are such as to always ensure the passage of current between the trolley wires and the shoe whenever they come into physical contact.

The widths of the two types of plate are determined by reference to the distance between the two trolley wire conductors.

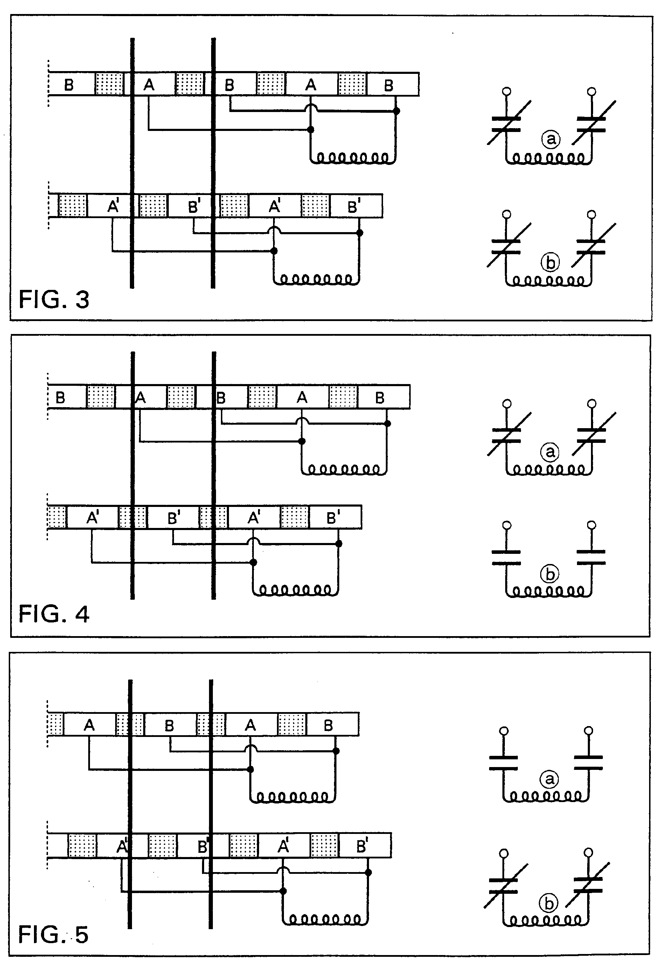

2. The drawings 2/5 and 3/7 comprise, respectively, Figs.3,4,5 and Figs.6 and 7: they show, schematically, the conditions of contact that should be created between the shoe, or roller, of the multiple collector and the trolley wires. Alongside each diagram, a corresponding electric circuit diagram is indicated.

Drawing 2/5
- Fig.3 shows the trolley wires when in contact with the conducting plates of the front MCTand also with those of the rear MCT. In this case both of the drcuits a) and b) are supplied with electric power.
- Fig.4 shows the wires when in contact with the conducting plates of the front shoe, but with the insulating plates of the rear shoe. In this case circuit a) is electrically activated, but not circuit b).
- Fig.5 shows the wires when in contact with the insulating plates of the front shoe, but with the conducting plates of the rear shoe. In this case circuit b) is electrically activated, but not circuit a).

In all cases (Figs.3,4,5) the overhead lines supply power to the transport vehicle.

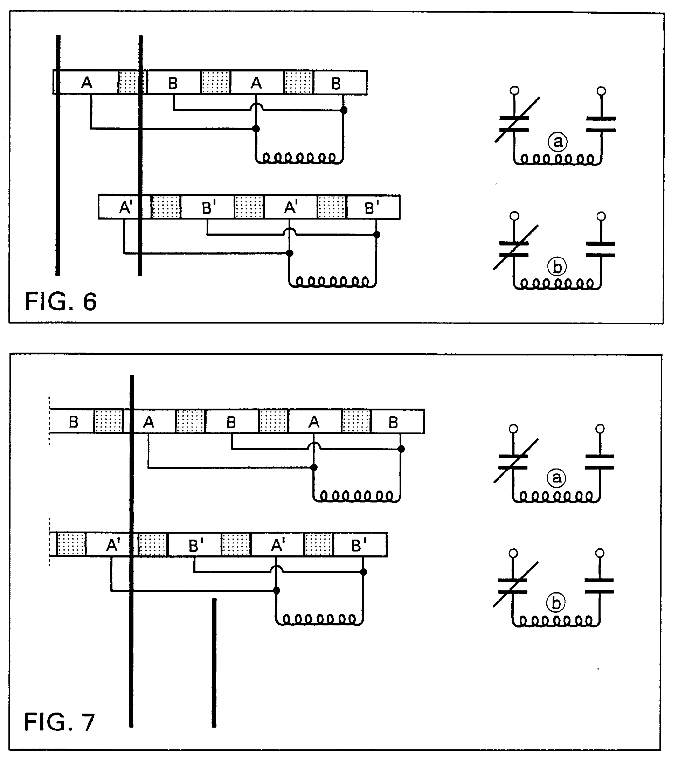

Drawing 3/5
- Fig.6 shows the trolley wires when one is in contact with the extreme conducting plate of the front shoe, the other with an insulating plate; and when there is only one contact with a conducting plate on the rear shoe. In this case neither circuit a) nor circuit b) is activated. Such conditions occur when the vehicle is about to move laterally outside the path served by the trolley wires. In such circumstances the pantograph automatically starts to descend, detaching the MCT from the trolley wires.
- Fig.7 shows a single wire in contact with the conducting plate of the front shoe and with the rear shoe.

In such cases neither circuit a) nor circuit b) is activated. This situation arises in every terminal tract of the trolley wires. In such circumstances the pantograph automatically starts to descend, detaching the MCT from the trolley wires.

In the situations referred to in Fig.6 and Fig.7, the trolley wires do not supply power to the transport vehicle, which must then depend on its storage batteries.

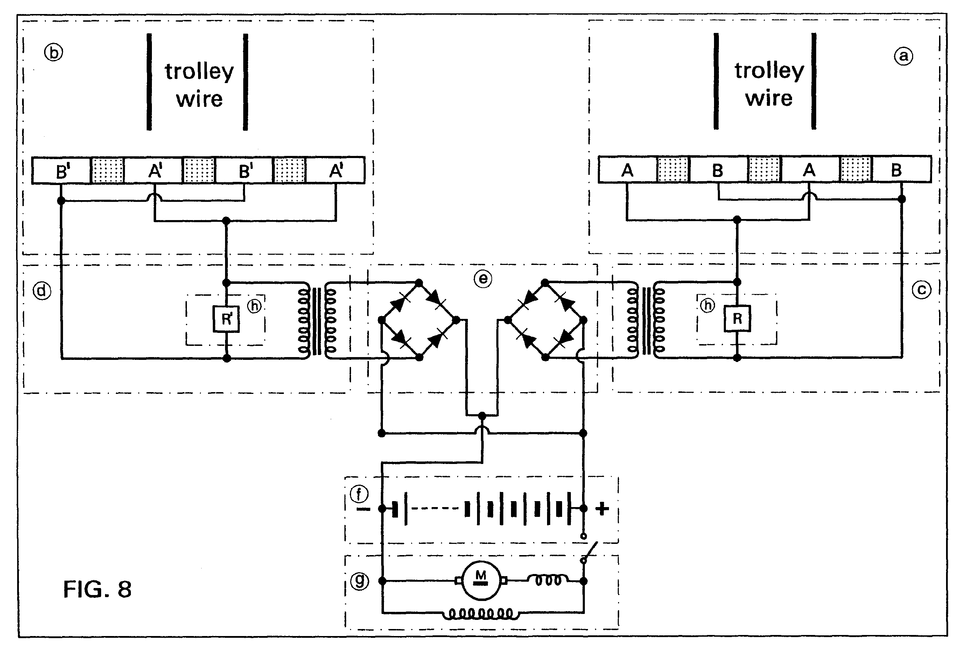

3. Drawing 4/5, consisting of Fig.8, shows the basic electrical scheme of the electrical equipment on board a vehicle employing the MCT.
- Fig.8(a) shows the power supply to the front MCTfrom the trolley wires,
- Fig.8(b) shows the power supply to the rear MCT from the trolley wires,
- Fig.8(c) shows the electric circuit at the base of the front MCT,
- Fig.8(d) shows the electric circuit at the base of the rear MCT,
- Fig.8(e) shows the current conversion system,
- Fig.8(f) shows the storage batteries for the autonomous power supply of the vehicle,
- Fig.8(g) shows the circuit of the electric motor of the vehicle,
- Fig.8(h) shows the relay which activates the system for automatic lowering of the pantograph.

From the scheme above, it is evident that the vehide can move autonomously, using the storage batteries on board, when it is not powered from the trolley wires.

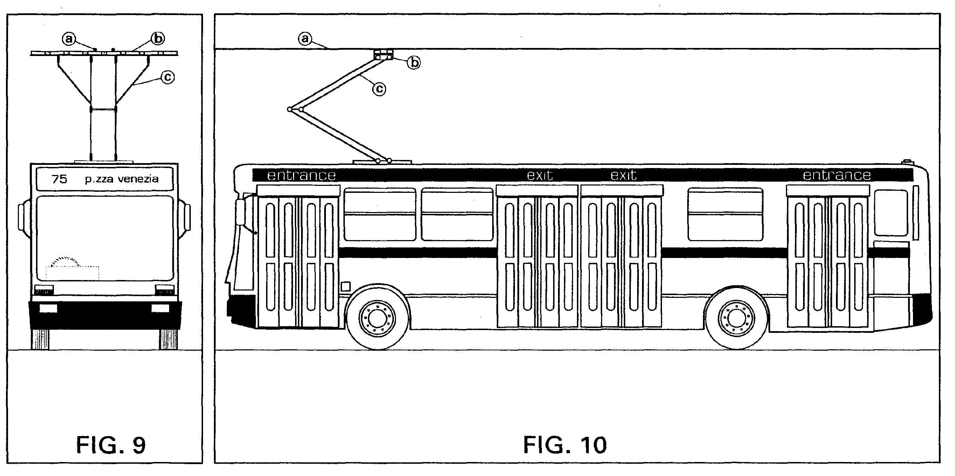

4. Drawing 5/5 comprises Fig.9 and Fig.10 and shows schematically how the MCT is employed in powering an urban transport vehicle from two-conductor trolley wires.
- Fig.9 (front view):
- Fig.9 (a), ground-based part, shows the two-conductor trolley wires, the conductors insulated from each other and from the earth,
- Fig.9 (b) shows the MCT on board the vehicle,
- Fig.9 (c) shows the pantographic support for the MCT.
- Fig.10 (side view):
- Fig.10 (a), ground-based part, shows the two-conductor trolley wires, the conductors insulated from each other and from the earth,
- Fig.9 (b) shows the MCT on board the vehicle,
- Fig.10 (c) shows the pantographic support for the MCT.

The extension in length of the MCT may be equal to or greater than the width of the vehicle.

The vehicle receives electric power from the trolley wires along a stretch of road whose width is twice the length of the MCT minus the distance between the two trolley wires.

Outside that stretch of road the vehicle can move autonomously, using power from its own storage batteries.

The pantograph:
- can be raised or lowered with the vehicle either stationary or in motion;
- is subject to a servo-command which automatically sees to the raising and lowering of the MCT whenever the position of the transport vehicle, relative to the trolley wires, permits (or does not permit) the establishment of electrical contact;
- is characterized by a a double support, forming a parallelogram, to maintain the MCT is a horizontal position.

## Claims

1. Basic element: contact shoe or roller, with several sectors, serving as electric current collector;

2. Configuration: use of two shoes (or two rollers), or yet more shoes (or rollers), assembled on a basic frame having a support of pantographic or equivalent type;

3. Geometry of the contact element: flat plate contact or rotating cylinder (roller-type) contact;

4. Construction materials for the basic element:
• conducting element: all materials having low electrical resistance;
• insulating element: all materials having high electrical resistance;

5. Function: mobile tap for trolley wires, single- or multi-phase, with one or more conductors;

6. Use: on transport vehicles or self-propelled vehicles with electric traction, whether or not equipped with storage batteries for autonomous power supply;

7. Mechanism for automatic disconnection: for lateral exit of the shoe as indicated in Fig.6

8. Mechanism for automatic disconnection: for end of the trolley wires as indicated in Fig.7

9. Name of the device: **Multiple Collector Trolley** (MCT)
